# EUROPÄISCHE PATENTSCHRIFT

(11) **EP 4 086 593 B1**
(45) Veröffentlichungstag und Bekanntmachung des Hinweises auf die Patenterteilung: **05.07.2023**
(21) Anmeldenummer: 22160312.9
(22) Anmeldetag: 04.03.2022
(51) Int. Cl.: G01F 15/18, G01D 11/30, G01F 23/284, G01D 11/24, G01K 1/14, G01L 19/14, G01S 13/88, H01Q 1/22, G01L 19/00

(54) **SENSOR ZUM BESTIMMEN EINER PROZESSGRÖSSE UND VERFAHREN ZUM VERBINDEN EINES GEHÄUSES UND EINES PROZESSANSCHLUSSES**
SENSOR FOR DETERMINING A PROCESS VARIABLE AND METHOD FOR CONNECTING A HOUSING AND A PROCESS CONNECTION
CAPTEUR PERMETTANT DE DÉTERMINER UNE GRANDEUR DE PROCESSUS ET PROCÉDÉ DE CONNEXION D'UN BOÎTIER ET D'UN CONNECTEUR DE PROCESSUS

(30) Priorität: 07.05.2021 DE 102021111990
(43) Veröffentlichungstag der Anmeldung: 09.11.2022
(73) Patentinhaber: SICK AG, 79183 Waldkirch (DE)
(72) Erfinder: Scholder, Jochen, 79183 Waldkirch (DE)

(56) Entgegenhaltungen:
- EP-A1- 3 018 278
- WO-A1-2010/069709
- US-A1- 2017 038 231

## Beschreibung

Die Erfindung betrifft einen Sensor zum Bestimmen einer Prozessgröße und ein Verfahren zum Verbinden eines Gehäuses und eines Prozessanschlusses nach dem Oberbegriff von Anspruch 1 beziehungsweise 10.

Zur Bestimmung von Prozessgrößen eines Mediums in einem Behälter sind diverse Sensoren bekannt, die beispielsweise den Füllstand oder die Temperatur messen. Einige Messverfahren sind berührungslos, andere nutzen eine Sonde, die in das zu vermessende Medium eintaucht. So misst die beispielsweise aus DE 10 2007 030 847 A1 bekannte Füllstandmessung mit Zeitbereichsreflektometrie (TDR, Time Domain Reflectometry) die Laufzeit von in einer Sonde geführten Mikrowellenpulsen bis zur Oberfläche des Mediums.

Der Sensor ist üblicherweise in einem schützenden Gehäuse untergebracht, aus dem eine mögliche vorhandene Sonde herausragt Die Verbindung mit dem Behälter wird als Prozessanschluss bezeichnet. Darüber wird der Sensor beispielsweise in einer Öffnung des Behälters befestigt, so dass der Sensor auf dem Behälter sitzt und dessen Sonde in den Behälter eintaucht. Während der Herstellung oder spätestens bei der Montage sind Gehäuse und Prozessanschluss miteinander zu verbinden. Es ist gewünscht, dass das Gehäuse gegenüber dem Prozessanschluss drehbar bleibt, um beispielsweise eine Anzeige des Sensors in eine gewünschte Richtung zu drehen, aus der sie abgelesen werden kann. Gleichzeitig soll aber die Verbindung axiale Kräfte aufnehmen, die auf den Prozessanschluss wirken.

Eine herkömmliche Lösung nach DIN 471 sieht dafür die Verwendung eines Sicherungsrings vor. Der Sicherungsring muss zur Montage über die Welle gespreizt werden. Hierbei darf der Einstich-Durchmesser im Vergleich zum Wellen-Durchmesser nur geringfügig kleiner sein, so dass der Sicherungsring bei der Montage nicht überdehnt wird. Ansonsten würde der Sicherungsring sich plastisch verformen, somit nicht mehr auf den vorgesehenen Durchmesser zurückstellen, und seine Funktion wäre dann nicht mehr gegeben. Weiterhin sind die axial auftretenden Kräfte durch die vorgegebene Überlappung im Einstich begrenzt.

Eine weitere herkömmliche Lösung nutzt zwei Stifte, die durch jeweils eine Bohrung im Prozessanschluss geschoben werden. Bei einem Prozessanschluss aus Edelstahl ist die Einbringung solcher Bohrungen aufwändig, da lange und dünne Bohrer auf schräg verlaufende Oberflächen treffen. Lange und dünne Zylinderstifte in der erforderlichen Länge sind standardmäßig nicht verfügbar und müssen deshalb eigens hergestellt werden. Wegen des dünnen Stiftquerschnitts sind die vertragenen axialen Kräfte begrenzt. Zusätzlich müssen die Stifte gegen Vibrationsbelastung und Herausrutschen gesichert werden. Das erfordert zum einen eine passgenaue und somit teure Herstellung der Schnittstellen und zum anderen das Einbringen eines Gewindes, einer Pressverbindung oder einer Sicherung mit Klebstoff, wobei ein verwendeter Klebstoff weder ein Gehäuse aus Kunststoff schädigen noch im Feld mit den verwendeten Medien reagieren darf.

Die DE 10 2010 038 732 A1 offenbart ein Verfahren zur Sicherung der Befestigung einer messenden Einheit eines Füllstandsmessgeräts an einem Prozessanschlusselement. Die lösbare, formschlüssige Gewindeverschraubung wird mittels einer radial einwirkenden Verformung gesichert. Drehbar ist die Verbindung im verbundenen, gesicherten Zustand nicht mehr. Außerdem unterliegt diese Lösung starken Einschränkungen bezüglich der Materialauswahl.

In der DE 10 2017 129 789 A1 wird ein Befestigungssystem für ein Sensorelement beschrieben, wobei die axiale Sicherung ganz klassisch mit einem dort als Klemme bezeichneten Sicherungsring erfolgt. Lediglich eine partielle Drehung bleibt noch möglich, wofür eine recht aufwändige Konstruktion mit einem segmentierten, gestuften Ring sorgt.

Die WO2020/244825 A1 befasst sich mit einem Messgerät mit einem Flansch zur Auflage auf die Oberseite einer Wand eines Behälters mit einer Öffnung. Mittels mehrerer Spann- oder Spreizvorrichtungen wird eine Spann- oder Spreizkraft auf die Unterseite der Wand oder auf die Innenseite der Öffnung ausgeübt, um den Flansch an der Öffnung zu befestigen. Ein Verdrehen des montierten Messgeräts ist nicht möglich.

Aus der DE 10 2013 216 524 B3 ist ein Druckmesserumformer mit verdrehbarer Gehäusehülse bekannt. Ein zylinderförmiger Gehäuseabschnitt, aus einem Blechmantel ist mit einem Prozessanschluss verbunden. In eine Ringnut des Prozessanschlusses ragt eine durch Umformen des Blechmantels erzeugte Verformung hinein, wodurch das Gehäuse gegenüber dem Prozessanschluss drehbar, aber in axialer Richtung fixiert ist. Diese Umformung erfordert einen hohen Aufwand bei der Herstellung, da das Gehäuse nicht fertig geformt mit dem Prozessanschluss verbunden wird, sondern die Umformung erst bei in den Prozessanschluss eingeschobenem Gehäuse vollendet werden kann. Zudem ist die Materialwahl des Gehäuses sehr stark begrenzt, da beispielsweise Kunststoff keine stabile Umformung zuließe. Es können weiterhin im Betrieb nur ähnlich hohe Kräfte aufgenommen werden wie beim Fügen der Teile. Das kann zu Problemen führen, wenn im Betrieb ein hoher Prozessdruck auftritt, der axial auf die Verbindung einwirkt.

Die WO 2010/069709 A1 offenbart eine Vorrichtung zur Bestimmung und/oder Überwachung einer Prozessgröße, die eine Sondeneinheit und einen Prozessanschluss aufweist. Am oberen Endbereich wird die Sondeneinheit von einem Bolzen mit einer Nut umfasst. In die Nut werden zwei Halbscheiben eines Halteelements eingebracht, das quasi den Durchmesser des Bolzens gezielt an dem Bereich der Nut derartig erweitert, dass die Sondeneinheit nicht mehr aus der Eingangsöffnung des Prozessanschäusses herausgezogen werden kann.

Es ist daher Aufgabe der Erfindung, eine verbesserte Verbindung zwischen Gehäuse und Prozessanschluss eines gattungsgemäßen Sensors zu schaffen.

Diese Aufgabe wird durch einen Sensor zum Bestimmen einer Prozessgröße und ein Verfahren zum Verbinden eines Gehäuses und eines Prozessanschlusses nach Anspruch 1 beziehungsweise 10 gelöst. Das Gehäuse des Sensors ist in einem Verbindungsbereich drehbar in dem Prozessanschluss des Sensors angeordnet. Über den Prozessanschluss wird der Sensor an dem Behälter angebracht. Gehäuse und Prozessanschluss weisen vorzugsweise zumindest in dem Verbindungsbereich eine rotationssymmetrische Form auf. Dabei hat das Gehäuse den kleineren Radius und sitzt damit innerhalb des Prozessanschlusses. Gehäuse und Prozessanschluss weisen einen radialen Freiheitsgrad auf, sind mit anderen Worten im Verbindungsbereich gegeneinander drehbar.

Die Erfindung geht von dem Grundgedanken aus, die Drehung um ein Fixierelement zu realisieren, das den radialen Freiheitsgrad ermöglicht und die Verbindung axial fixiert. Das Fixierelement ist vorzugsweise im Wesentlichen ringförmig. Das Gehäuse weist an seinem Außenumfang eine umlaufende erste Nut und der Prozessanschluss an seinem Innenumfang eine umlaufende zweite Nut auf. Gehäuse und Prozessanschluss sind axial so zueinander angeordnet, dass die beiden Nuten auf einer gleichen Höhe liegen und somit radial ineinander übergehen. In dem aus den beiden Nuten gebildeten Hohlraum ist das Fixierelement angeordnet. Es ist radial nach innen in die erste Nut oder radial nach außen in die zweite Nut verschoben. Der Begriff Verschieben lehnt sich daran an, wie das Fixierelement diese radiale Position erreicht hat, da es nur vor dem Verschieben axial beweglich ist und nach dem Verschieben durch die Nuten axial fixiert ist. Der Begriff beschreibt ebenso die erreichte Position, die gegenüber der ursprünglich besetzten Nut verschoben ist. In der montierten Position befindet sich das Fixierelement mit einem jeweiligen radialen Anteil sowohl in der ersten Nut als auch in der zweiten Nut.

Die Erfindung hat den Vorteil, dass eine robuste Verbindung von Gehäuse und Prozessanschluss geschaffen ist. Das Gehäuse bleibt in dieser Verbindung gegenüber dem Prozessanschluss drehbar, und die Verbindung nimmt auch hohe axiale Kräfte auf, die auf den Prozessanschluss wirken. Die erfindungsgemäße Verbindung kann auch bei tiefen Einstichen an der Verbindung oder Schnittstelle zwischen Gehäuse und Prozessanschluss eingesetzt werden. Die Lösung benötigt wenig Bauraum und ist kostengünstig. Die erforderliche Formgebung an Gehäuse und Prozessanschluss ist beispielsweise mittels Zerspanung oder Spritzguss kostenneutral oder mit sehr geringem Einmalaufwand möglich.

Das Fixierelement ist in einer Alternative radial nach innen in die erste Nut gedrückt. In dieser Ausführungsform war das Fixierelement ursprünglich in die zweite Nut des Prozessanschlusses eingelegt. Nach dem Zusammensetzen von Gehäuse und Prozessanschluss wurde es dann nach innen verschoben. Wie schon ausgeführt, wird das Fixierelement nicht ganz aus der zweiten Nut herausgedrückt, sondern besetzt in seinem montierten Zustand einen radialen Teil beider Nuten.

Das Fixierelement ist in einer anderen Alternative radial nach außen in zweite Nut gezogen. Das ist die umgekehrte Ausführungsform zu derjenigen des vorigen Absatzes. In diesem Fall war das Fixierelement ursprünglich in die erste Nut des Gehäuses eingelegt. Nach dem zusammensetzen von Gehäuse und Prozessanschluss wurde es dann nach außen gezogen. Wiederum wird das Fixierelement nicht ganz aus der ersten Nut herausgezogen, sondern besetzt in seinem montierten Zustand einen radialen Teil beider Nuten_

Das Fixierelement ist mittels einer radialen Schraube verschoben. Bevorzugt sind mehrere radiale Schrauben vorgesehen, die über den Umfang des Verbindungsbereichs verteilt sind, insbesondere zwei gegenüberliegende Schrauben. Das Fixierelement ist durch das Anziehen der mindestens einen radialen Schraube nach innen in die erste Nut gedrückt oder nach außen in die zweite Nut gezogen.

Der Prozessanschluss oder das Fixierelement weist bevorzugt ein Gewinde für die mindestens eine radiale Schraube auf, im Falle mehrerer radialer Schrauben eine passende Anzahl und Anordnung von Gewinden. Ein Gewinde im Prozessanschluss sorgt dafür, dass die mindestens eine radiale Schraube beim Anziehen eine Kraft nach innen ausübt, somit das Fixierelement nach innen in die erste Nut gedrückt wird. Ein Gewinde in dem Fixierelement hingegen sorgt dafür, dass die mindestens eine radiale Schraube beim Anziehen eine Kraft nach außen ausübt, somit das Fixierelement nach außen in die zweite Nut gezogen wird.

Das Fixierelement ist bevorzugt aus mehreren Fixierelementteilen zusammengesetzt. Zwischen den Fixierelementteilen gibt es eine Flexibilität, die dem zusammengesetzten Fixierelement einen kleineren oder größeren Radius ermöglichen. Diese Veränderung ermöglicht das radiale Verschieben in den Nuten. Außerdem kann das mehrteilige Fixierelement in seiner zunächst vorgesehenen Nut zusammengesetzt werden, so dass es nicht axial über größere Radien verschoben muss, was bei dem einleitend angesprochenen Sicherungsring erforderlich wäre.

Die Fixierelementteile sind vorzugsweise ineinander steckbar. Das ist eine besonders einfache, werkzeuglose Möglichkeit, das Fixierelement zusammenzusetzen. Bevorzugt weisen die Fixierelementteile mindestens eine Bohrung und/oder mindestens einen Stift auf, wobei das Einschieben von Stift und Bohrung jeweiliger Fixierelementteile das Fixierelement zusammensetzt.

Die Fixierelementteile sind bevorzugt als Ringsegmente, insbesondere Halbringe ausgebildet. Aus den Ringsegmenten wird ein ringförmiges Fixierelement zusammengesetzt. Besonders bevorzugt sind an den jeweiligen Enden der Ringsegmente in Umfangsrichtung Verbindungselemente vorgesehen, wie mindestens ein Stift beziehungsweise mindestens eine Bohrung, mit denen die Ringsegmente sich einfach zusammensetzen lassen. Besonders bevorzugt ist das Fixierelement zweiteilig, besteht demnach aus zwei Ringsegmenten, die wiederum vorzugsweise jeweils eine Hälfte des Umfangs umfassen und somit als Halbringe ausgebildet sind. Zwei Fixierelementteile zeigen bereits den Vorteil, dass das Fixierelement erst in der vorgesehenen Position seiner Nut zusammensetzbar ist, mehr Fixierelementteile sind daher oft nicht erforderlich. Als Ring, insbesondere aus zwei Halbringen, hat das Fixierelement eine besonders einfache Geometrie. Zusätzlich zu dem einfachen Halbring werden nur Standardelemente und Standardteile wie Bohrungen, Gewinde, Schrauben oder Zylinderstifte benötigt, so dass besonders kostengünstige Ausführungsformen ermöglicht werden.

Die Fixierelementteile sind bevorzugt untereinander baugleich ausgebildet. Die Fixierelementteile passen folglich mit sich selbst zusammen. Eine Gleichteilverwendung vereinfacht Herstellung und Handhabung. Varianten für eine vorgesehene Orientierung und/oder Position in dem Fixierelement sind nicht erforderlich oder lassen sich durch Einsetzen von Stiften bilden.

Das Gehäuse, der Prozessanschluss und/oder das Fixierelement sind bevorzugt aus Metall oder Kunststoff hergestellt. Im Gegensatz zu vielen herkömmlichen Lösungen ist die Erfindung nicht auf eine bestimmte Materialwahl angewiesen. Daher sind auch beliebige Mischformen möglich. Besonders bevorzugt ist der im Feld besonders beanspruchte Prozessanschluss aus Metall, insbesondere Edelstahl hergestellt. Für das Gehäuse und das Kunststoffelement sind Metalle wie Kunststoffe gleichermaßen vorstellbar. Alle gängigen Herstellverfahren stehen zur Verfügung, beispielsweise können die Teile Kunststoff-Spritzgussteile ebenso wie zerspante Teile aus Kunststoff oder Metall sein.

Der Sensor weist bevorzugt eine insbesondere langgestreckte Sonde zum Eintauchen in ein Medium in dem Behälter auf. Die Sonde ist mindestens mittelbar mit dem Gehäuse verbunden und wird bei zahlreichen Messprinzipien benötigt.

Der Sensor weist bevorzugt eine Steuer- und Auswerteeinheit zum Messen der Prozessgröße auf. Die Messung nutzt insbesondere die langgestreckte Sonde. Es sind aber auch kurze Sonden und berührungslose Messverfahren möglich.

Der Prozessanschluss weist bevorzugt ein Gewinde auf. Damit wird der Prozessanschluss und folglich der Sensor in eine Öffnung des Behälters eingeschraubt. Alternativ ist ein Prozessanschluss ohne Gewinde denkbar, beispielsweise mit einer Klemmverbindung nach DIN 32676.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittansicht eines Füllstandsensors in einem Behälter;
- Fig. 2: eine Ansicht eines Gehäuses eines Sensors und eines zweiteiligen Fixierelements;
- Fig. 3: eine Ansicht gemäß Figur 2, nachdem das zweiteilige Fixierelement in eine Nut des Gehäuses eingelegt ist;
- Fig. 4: eine Ansicht des Gehäuses beim Aufstecken eines Prozessanschlusses;
- Fig. 5: eine Ansicht gemäß Figur 4, nachdem Gehäuse und Prozessanschluss in die vorgesehene axiale Position gebracht sind;
- Fig. 6: eine Ansicht gemäß Figur 5 mit zwei radialen Schrauben;
- Fig. 7: eine Ansicht gemäß Figur 6, nachdem die radialen Schrauben angezogen sind;
- Fig. 8: eine Längsschnittansicht zu Figur 6 vor dem Einsetzen der radialen Schrauben;
- Fig. 9: eine Längsschnittansicht zu Figur 7 nach dem Anziehen der radialen Schrauben;
- Fig. 10: eine dreidimensionale Ansicht aus schräger Perspektive auf den Querschnitt eines Verbindungsbereichs mit dem in das Gehäuse eingelegten Fixierelement in der Situation vor dem Einsetzen der radialen Schrauben gemäß Figur 6;
- Fig. 11: eine dreidimensionale Ansicht aus schräger Perspektive auf den Querschnitt des Verbindungsbereichs mit dem in das Gehäuse eingelegten Fixierelement in der Situation nach dem Anziehen der radialen Schrauben gemäß Figur 7;
- Fig. 12: eine Querschnittansicht gemäß Figur 10;
- Fig. 13: eine Querschnittansicht gemäß Figur 11;
- Fig. 14: eine Querschnittansicht ähnlich Figur 12 für eine alternative Ausführungsform, in der das Fixierelement in eine Nut des Prozessanschlusses eingelegt wird, in einer Grundstellung vor dem Anziehen einer radialen Schraube; und
- Fig. 15: eine Querschnittansicht zu Figur 14 nach dem Anziehen der radialen Schraube.

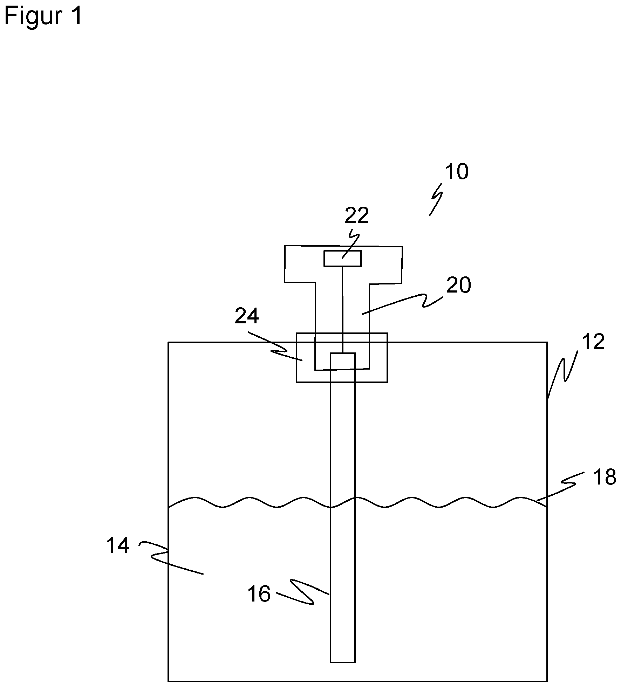

Figur 1 zeigt schematisch in einer Seitenansicht einen als Füllstandsensor ausgebildeten Sensor 10, der in einem Tank oder Behälter 12 mit einem Medium 14 angebracht ist. Eine Sonde 16 ragt in das Medium 14 hinein, vorzugsweise bis zum Boden des Behälters 12. Das Medium 14 bildet eine Grenzfläche 18, und der Sensor 10 ist dafür ausgebildet, die Entfernung der Grenzfläche 18 zu ermitteln und somit den Füllstand des Mediums 14 abzuleiten. Ein Füllstandsensor als Sensor 10 ist nur ein Beispiel. Der Sensor 10 kann für andere Anwendungen der Prozessmesstechnik ausgebildet sein, beispielsweise als Druckmesser, Durchflussmesser oder Temperaturmesser. Einige Ausführungsformen eines Sensors 10 benötigen keine Sonde 16 oder kommen mit einer kurzen Sonde aus.

Der Sensor 10 weist in seinem oberen Bereich ein Gehäuse 20 auf, in dem seine Elektronik, Kommunikationsschnittstellen und dergleichen untergebracht sind. Stellvertretend ist nur eine Steuer- und Auswertungseinheit 22 gezeigt, die mit der Sonde 16 verbunden ist, das Messverfahren steuert und die Messwerte gewinnt und mit der Anlage kommuniziert, in der der Sensor 10 eingesetzt ist. Bei einem TDR-Messverfahren beispielsweise (TDR, Time Domain Reflectometry, Zeitbereichsreflexion) sendet die Steuer- und Auswertungseinheit 22 einen kurzen elektromagnetischen Puls, vorzugsweise einen Mikrowellenpuls, durch die Sonde 16. An der Grenzfläche 18 springt die relative Dielektrizitätskonstante und damit der Wellenleitwiderstand und erzeugt so einen Reflexpuls. Mit dem Reflexpuls bestimmt die Steuer- und Auswertungseinheit 22 die Laufzeit zu der Grenzfläche 18 und über die Signalausbreitungsgeschwindigkeit deren Entfernung. Zumindest Teile der Sensorfunktionalität können alternativ zu der Darstellung in Figur 1 in einem von dem Behälter abgesetzten Gehäuse vorgesehen sein.

Das Gehäuse 20 ist mit einem Prozessanschluss 24 verbunden. Diese Verbindung wird nachfolgend unter Bezugnahme auf die weiteren Figuren näher erläutert. Mittels des Prozessanschlusses 24 wird der Sensor 10 an dem Behälter 12 angebracht, insbesondere in einer Öffnung an der Behälterdecke oder einer Behälterwand.

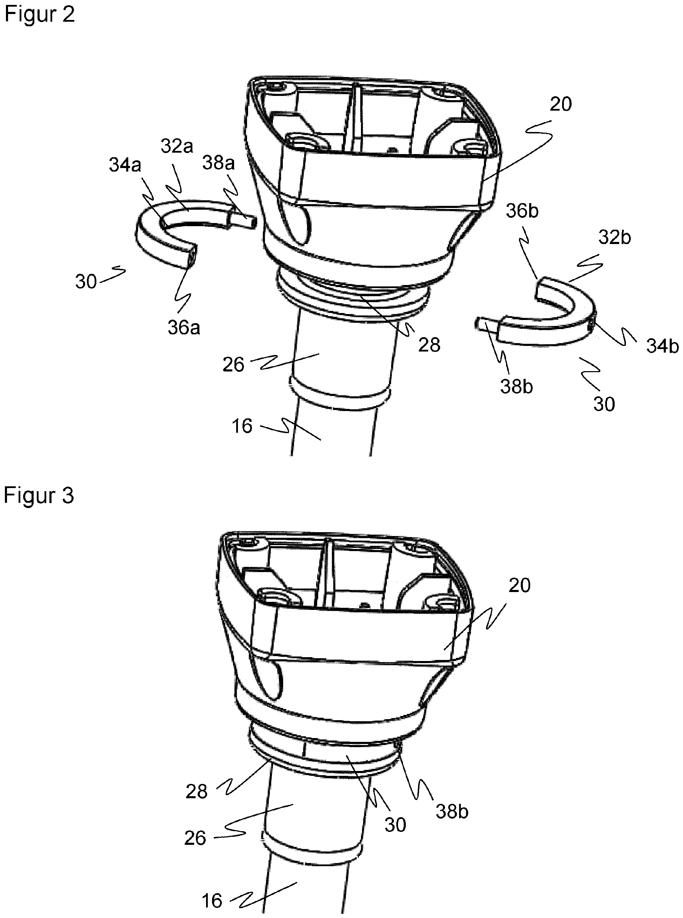

Figur 2 zeigt eine Ausgangssituation für eine Verbindung des Gehäuses 20 mit dem hier noch nicht dargestellten Prozessanschluss 24. Um einem Verbindungsbereich 26 des Gehäuses 20 läuft am Außenumfang des Gehäuses 20 eine Nut 28. Ein in Figur 2 noch in Einzelteilen dargestelltes Fixierelement 30 weist zwei als vorzugsweise baugleiche Halbringe ausgebildete Fixierelementteile 32a-b auf. Die Fixierelementteile 32a-b sind jeweils mit einem Gewinde 34a-b für eine noch zu erläuternde radiale Schraube versehen. An den Enden der Fixierelementteile 32a-b sind in Umfangsrichtung jeweils Bohrungen 36a-b angebracht. In diese Bohrungen 36a-b lassen sich Passstifte 38a-b einsetzen, und über den wechselseitigen Eingriff der Stifte 38a-b in die Bohrungen 36a-b werden die beiden Fixierelementteile 32a-b in der Nut 28 zu dem Fixierelement 30 zusammengesteckt. Figur 3 zeigt das zusammengesetzte Fixierelement 30 in der Nut 28 nach diesem Schritt.

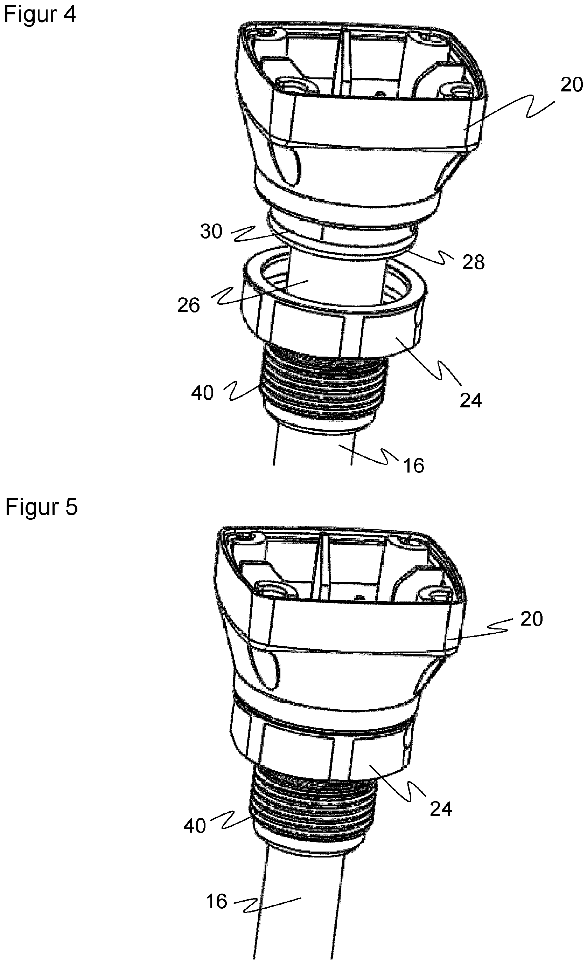

In Figur 4 wird ausgehend von dem Gehäuse 20 mit Fixierelement 30 in dessen Nut 28 der Prozessanschluss 24 axial über den Verbindungsbereich 26 geschoben. Der Prozessanschluss 24 weist ein Außengewinde 40 auf, mit dem der Sensor 10 an dem Behälter 12 angebracht werden kann. Figur 5 zeigt die endgültige axiale Position, in der nun der Prozessanschluss 24 den Verbindungsbereich 26 und die Nut 28 überdeckt.

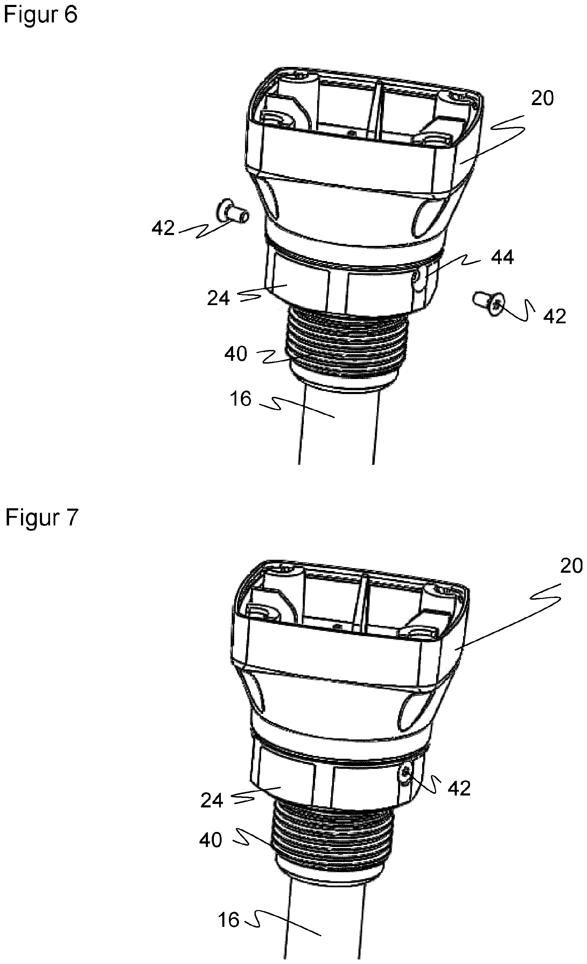

Wie in den Figuren 6 und 7 gezeigt, werden anschließend radiale Schrauben durch seitliche Öffnungen 44 des Prozessanschlusses 24 eingebracht und in den hier nicht mehr sichtbaren Gewinden 34a-b der Fixierelementteile 32a-b verschraubt. Figur 6 zeigt die Ausgangssituation mit den noch abgesetzten radialen Schrauben 42, Figur 7 die fertig montierte Verbindung von Gehäuse 20 und Prozessanschluss 24.

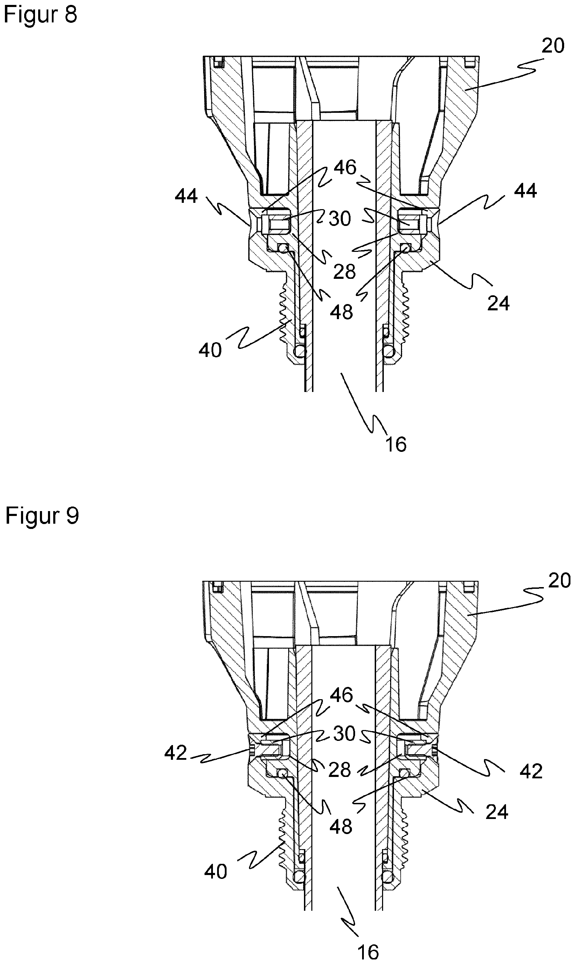

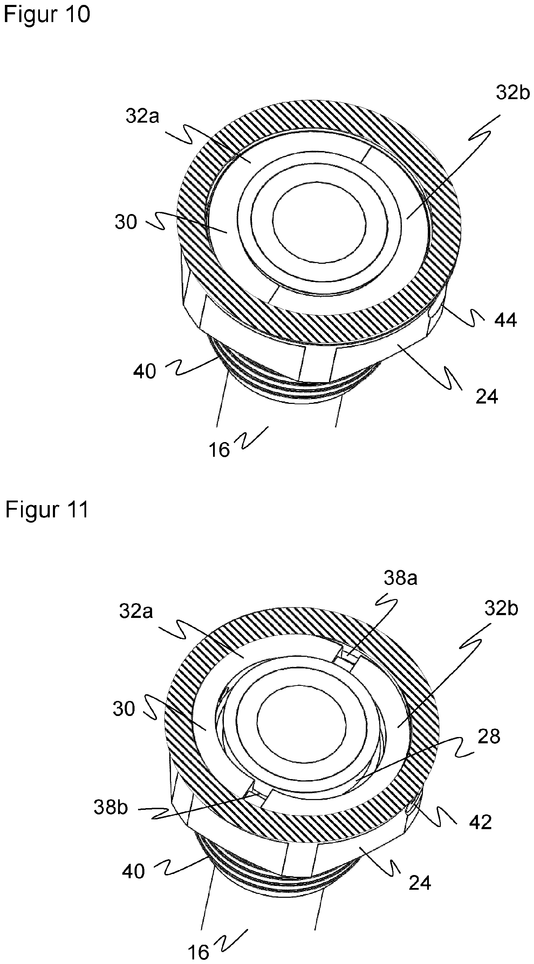

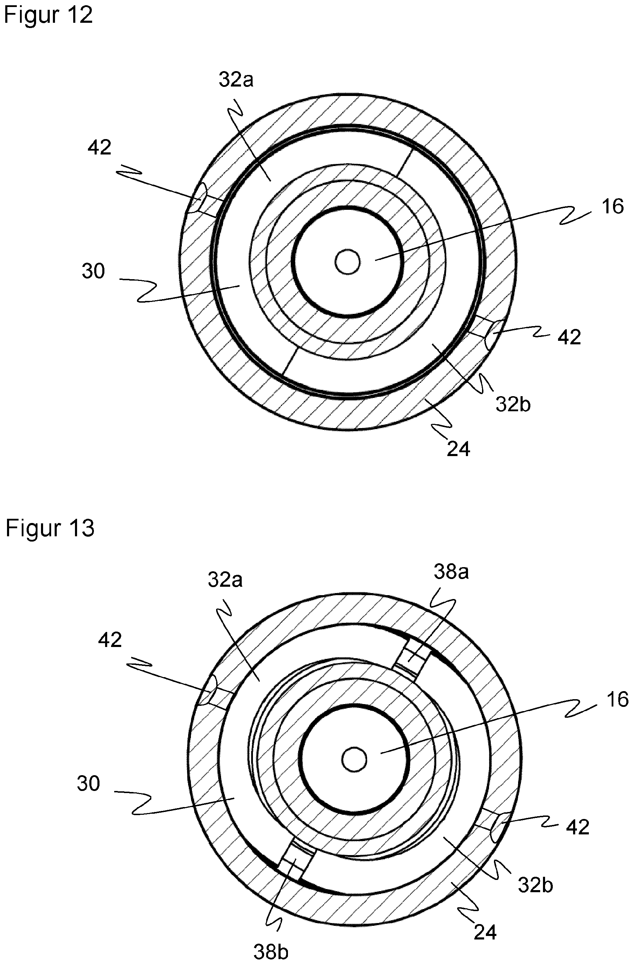

Die Außenansichten der Figuren 6 und 7 lassen das Funktionsprinzip noch nicht gut erkennen. Daher sind in Figur 8 und 9 zugehörige Längsschnitte gezeigt, wobei Figur 8 wie in Figur 6 die Ausgangssituation und Figur 9 wie in Figur 7 die fertig montierte Verbindung von Gehäuse 20 und Prozessanschluss 24 zeigt. Die Figuren 10 und 11 zeigen ergänzend eine dreidimensionale Sicht auf einen Querschnitt aus schräger Perspektive in der Ausgangssituation beziehungsweise für die fertig montierte Verbindung, die Figuren 12 und 13 entsprechende Querschnittsansichten.

In dem Prozessanschluss 24 ist eine an dessen Innenumfang verlaufende Nut 46 vorgesehen. Diese Nut 46 kann als Hinterschnitt eingebracht werden. Je nach Fertigungstechnik des Prozessanschlusses 24 kann die Nut 46 beispielsweise durch einen Einstich bei einem Zerspanungsteil oder durch partielle Durchtaucher im Spritzgusswerkzeug bei einem Spritzgussteil entstehen. Gehäuse 20 und Prozessanschluss 24 sind nach der zu den Figuren 4 und 5 erläuterten axialen Positionierung so ausgerichtet, dass die Nut 28 des Gehäuses 20 und die Nut 46 des Prozessanschlusses radial ineinander übergehen und so einen gemeinsamen umlaufenden Hohlraum bilden, in dem sich das Fixierelement 30 befindet.

Zunächst in der Ausgangssituation gemäß Figur 8, 10 und 12 befindet sich das Fixierelement 30 noch in der Nut 28 des Gehäuses 20. Durch Anziehen der radialen Schrauben 42 in den Gewinden 34a-b des Fixierelements 30 werden die beiden Fixierelementteile 32a-b durch partielles Herausziehen der Stifte 38a-b aus den Bohrungen 36a-b radial auseinander und nach außen in die Nut 46 des Prozessanschlusses 24 gezogen. In der fertig montierten Verbindung von Gehäuse 20 und Prozessanschluss 24 gemäß Figur 9, 11 und 13 ist dann das Fixierelement 30 noch teilweise in der Nut 28 des Gehäuses 20 und teilweise in der Nut 46 des Prozessanschlusses 24 positioniert.

Dadurch weist die Verbindung zwischen Gehäuse 20 und Prozessanschluss 24 noch einen radialen Freiheitsgrad auf, denn das Fixierelement 30 lässt ein gegenseitiges Verdrehen weiterhin zu. Zugleich werden axiale Kräfte aufgenommen, da das Fixierelement 30 in beiden Nuten 28, 46 axial gestützt ist. In den Figuren 8 und 9 ist noch ergänzend ein vorteilhafter O-Ring 48 gezeigt, der das Gehäuse 20 gegen Anschlag drückt, um ungewollte Rotation durch Vibration zu verhindern.

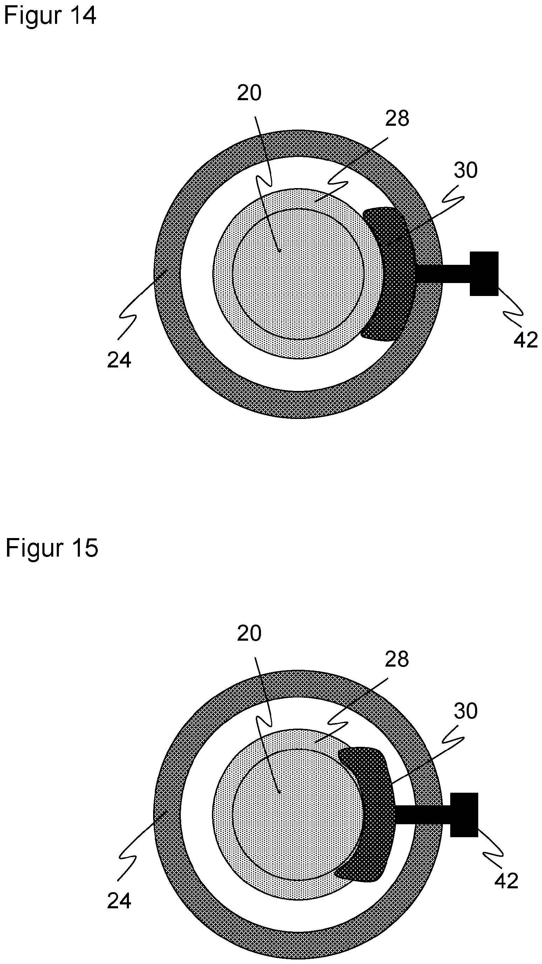

Die Figuren 14 und 15 illustrieren eine weitere Ausführungsform, die das Prinzip umkehrt, das Fixierelement 30 nach außen zu ziehen, das stattdessen nach innen geschoben wird. Es sind hier nicht mehr alle Zwischenschritte und Elemente gezeigt, sondern nur noch ein Querschnitt der Ausgangsposition in Figur 14 und der fertig montierten Verbindung zwischen Gehäuse 20 und Prozessanschluss 24 in Figur 15. In dieser Ausführungsform wird das Fixierelement in die Nut 46 des Prozessanschlusses 24 eingelegt, bevor der Prozessanschluss 24 über den Verbindungsbereich 26 des Gehäuses geschoben wird. Dafür sollte die Nut 46 beziehungsweise der Einstich im Prozessanschluss tiefer gestaltet werden, um das Fixierelement 30 aufnehmen zu können. Nach der axialen Positionierung von Gehäuse 20 und Prozessanschluss 24 wird das Fixierelement 30 durch Anziehen der radialen Schrauben 42 in die Nut 28 des Gehäuses 28 gedrückt. Statt der Gewinde 34a-b im Fixierelement 30 sind dafür Gewinde im Prozessanschluss 24 eingebracht.

Das Fixierelement 30 ist in den Figuren 2 bis 13 zweiteilig und in Figur 14 und 15 einteilig gezeigt. Prinzipiell sind zwei gleichteilige Halbringe besonders vorteilhaft, aber die Erfindung ist darauf nicht beschränkt. Es sind mehrteilige Fixierelemente 30 aus gleichen oder unterschiedlichen Fixierelementteilen 32 wie unterschiedliche Verbindungen zwischen den Fixierelementteilen 32 und unterschiedliche Materialien denkbar. Die Bohrungen für die Gewinde 34a-b können außermittig gesetzt sein. Prinzipiell sind auch zwei oder mehr Nuten und Fixierelemente übereinander vorstellbar, um die Verbindung gegen besonders große axiale Kräfte weiter zu stärken.

## Patentansprüche

1. Sensor (10) zum Bestimmen einer Prozessgröße in einem Behälter (12), wobei der Sensor (10) ein Gehäuse (20) und einen Prozessanschluss (24) aufweist und das Gehäuse (20) in einem Verbindungsbereich (26) drehbar in dem Prozessanschluss (24) angeordnet ist, und das Gehäuse (20) an seinem Außenumfang eine umlaufende erste Nut (28) und der Prozessanschluss (24) an seinem Innenumfang eine umlaufende zweite Nut (46) aufweist, wobei die beiden Nuten (28, 46) auf einer gleichen Höhe liegen und somit radial ineinander übergehen und in dem aus den beiden Nuten (28, 46) gebildeten Hohlraum ein Fixierelement (30) angeordnet ist,
**dadurch gekennzeichnet,**
**dass** das Fixierelement (30) entweder ursprünglich in die zweite Nut (46) eingelegt und dann zum Erreichen einer montierten Position nach innen verschoben ist oder ursprünglich in die erste Nut (28) eingelegt und dann zum Erreichen einer montierten Position nach außen gezogen ist,
wobei sich in der montierten Position das Fixierelement (30) mit einem jeweiligen radialen Anteil sowohl in der ersten Nut (28) als auch in der zweiten Nut (46) befindet,
und **dass** zum Verschieben beziehungsweise zum Ziehen des Fixierelements (30) aus seiner ursprünglichen Position mindestens eine radiale Schraube (42) vorhanden ist.

2. Sensor (10) nach Anspruch 1,
wobei der Prozessanschluss (24) oder das Fixierelement (30) ein Gewinde (34a-b) für die mindestens eine radiale Schraube (42) aufweist.

3. Sensor (10) nach einem der vorhergehenden Ansprüche,
wobei das Fixierelement (30) aus mehreren Fixierelementteilen (32a-b) zusammengesetzt ist.

4. Sensor (10) nach Anspruch 3,
wobei die Fixierelementteile (32a-b) ineinander steckbar sind und insbesondere mindestens eine Bohrung (36a-b) und/oder mindestens einen Stift (38a-b) aufweisen.

5. Sensor (10) nach Anspruch 3 oder 4,
wobei die Fixierelementteile (32a-b) als Ringsegmente, insbesondere Halbringe ausgebildet sind.

6. Sensor (10) nach einem der Ansprüche 3 bis 5,
wobei die Fixierelementteile (32a-b) untereinander baugleich ausgebildet sind.

7. Sensor (10) nach einem der vorhergehenden Ansprüche,
wobei das Gehäuse (20), der Prozessanschluss (24) und/oder das Fixierelement (30) aus Metall oder Kunststoff hergestellt sind.

8. Sensor (10) nach einem der vorhergehenden Ansprüche,
der eine Sonde (16) zum Eintauchen in ein Medium (14) in dem Behälter (12) und/oder eine Steuer- und Auswerteeinheit (22) zum Messen der Prozessgröße aufweist.

9. Sensor (10) nach einem der vorhergehenden Ansprüche,
wobei der Prozessanschluss (24) ein Gewinde (40) oder eine Klemmverbindung aufweist.

10. Verfahren zum Verbinden eines Gehäuses (20) und eines Prozessanschlusses (24) eines Sensors (10) nach einem der vorhergehenden Ansprüche, **dadurch gekennzeichnet,**
**dass** zunächst ein Fixierelement (30) in eine umlaufende erste Nut (28) am Außenumfang des Gehäuses (20) oder in eine umlaufende zweite Nut (46) am Innenumfang des Prozessanschlusses (24) eingelegt wird, dass das Gehäuse (20) in einem Verbindungsbereich (26) axial in den Prozessanschluss (24) eingeschoben wird, so dass die erste Nut (28) und die zweite Nut (46) in dem Verbindungsbereich (26) axial bündig übereinander liegen, und dass anschließend das Fixierelement (30) radial in die erste Nut (28) gedrückt oder in die zweite Nut (46) gezogen wird.

## Claims

1. A sensor (10) for determining a process variable in a container (12), the sensor (10) comprising a housing (20) and a process connection (24), the housing (20) being rotatably arranged in the process connection (24) in a connecting region (26), with the housing (20) comprising a circumferential first groove (28) on its outer circumference and the process connection (24) comprising a circumferential second groove (46) on its inner circumference, wherein the two grooves (28, 46) are arranged at a same height and thus merge radially into one another, and a fixing element (30) is arranged in the cavity formed by the two grooves (28, 46),
**characterized in that** the fixing element (30) is either originally inserted into the second groove (46) and then displaced inwards to achieve an assembled position, or is originally inserted into the first groove (28) and then pulled outwards to achieve an assembled position,
wherein, in the assembled position, the fixing element (30) is located with a respective radial portion both in the first groove (28) and in the second groove (46),
and **in that** there is at least one radial screw (42) for displacing or pulling the fixing element (30) from its original position.

2. The sensor (10) according to claim 1,
wherein the process connection (24) or the fixing element (30) comprises a thread (34a-b) for the at least one radial screw (42).

3. The sensor (10) according to any of the preceding claims,
wherein the fixing element (30) is composed of a plurality of fixing element parts (32a-b).

4. The sensor (10) according to claim 3,
wherein the fixing element parts (32a-b) can be plugged into one another and in particular have at least one bore (36a-b) and/or at least one pin (38a-b).

5. The sensor (10) according to claim 3 or 4,
wherein the fixing element parts (32a-b) are configured as ring segments, in particular half rings.

6. The sensor (10) according to any of claims 3 to 5,
wherein the fixing element parts (32a-b) are of identical construction to one another.

7. The sensor (10) according to any of the preceding claims,
wherein the housing (20), the process connection (24) and/or the fixing element (30) are made of metal or plastic.

8. The sensor (10) according to any of the preceding claims,
comprising a probe (16) for immersion in a medium (14) in the container (12) and/or a control and evaluation unit (22) for measuring the process variable.

9. The sensor (10) according to any of the preceding claims,
wherein the process connection (24) comprises a thread (40) or a clamp connection.

10. A method for connecting a housing (20) and a process connection (24) of a sensor (10) according to any of the preceding claims,
**characterized in that** a fixing element (30) is first inserted into a circumferential first groove (28) on the outer circumference of the housing (20) or into a circumferential second groove (46) on the inner circumference of the process connection (24), **in that** the housing (20) is pushed axially into the process connection (24) in a connecting region (26), so that the first groove (28) and the second groove (46) are arranged axially flush one above the other in the connecting region (26), and **in that** the fixing element (30) is then pressed radially into the first groove (28) or pulled into the second groove (46).

## Revendications

1. Capteur (10) pour la détermination d'une variable de processus dans un récipient (12), le capteur (10) comprenant un boîtier (20) et un raccord de processus (24), le boîtier (20) étant disposé de manière rotative dans le raccord de processus (24) dans une zone de connexion (26), le boîtier (20) comporte sur sa périphérie extérieure une première rainure (28) périphérique et le raccord de processus (24) comporte sur sa périphérie intérieure une deuxième rainure (46) périphérique, les deux rainures (28, 46) étant disposées à une même hauteur et se rejoignant ainsi radialement, et un élément de fixation (30) étant disposé dans la cavité formée par les deux rainures (28, 46),
**caractérisé en ce que** l'élément de fixation (30) soit initialement inséré dans la deuxième rainure (46) et ensuite déplacé vers l'intérieur pour atteindre une position assemblée, ou soit initialement inséré dans la première rainure (28) et ensuite tiré vers l'extérieur pour atteindre une position assemblée,
dans lequel, dans la position assemblée, l'élément de fixation (30) est situé avec une partie radiale respective aussi bien dans la première rainure (28) que dans la deuxième rainure (46),
et **en ce qu'**il y a au moins une vis radiale (42) pour déplacer ou tirer l'élément de fixation (30) de sa position initiale.

2. Capteur (10) selon la revendication 1,
dans lequel le raccord de processus (24) ou l'élément de fixation (30) comprend un filetage (34a- b) pour l'au moins une vis radiale (42).

3. Capteur (10) selon l'une des revendications précédentes,
dans lequel l'élément de fixation (30) est composé de plusieurs parties d'élément de fixation (32a-b).

4. Capteur (10) selon la revendication 3,
dans lequel les parties d'élément de fixation (32a-b) peuvent être emboîtées les unes dans les autres et présentent en particulier au moins un alésage (36a-b) et/ou au moins une broche (38a-b).

5. Capteur (10) selon la revendication 3 ou 4,
dans lequel les parties d'élément de fixation (32a-b) sont configurées comme des segments d'anneau, en particulier des demi-anneaux.

6. Capteur (10) selon l'une des revendications 3 à 5,
dans lequel les parties d'élément de fixation (32a-b) sont de construction identique entre elles.

7. Capteur (10) selon l'une des revendications précédentes,
dans lequel le boîtier (20), le raccord de processus (24) et/ou l'élément de fixation (30) sont en métal ou en plastique.

8. Capteur (10) selon l'une des revendications précédentes,
comprenant une sonde (16) pour l'immersion dans un milieu (14) dans le réservoir (12) et/ou une unité de commande et d'évaluation (22) pour mesurer la variable de processus.

9. Capteur (10) selon l'une des revendications précédentes,
dans lequel le raccord de processus (24) comprend un filetage (40) ou un raccord de serrage.

10. Procédé pour connecter un boîtier (20) et un raccord de processus (24) d'un capteur (10) selon l'une des revendications précédentes,
**caractérisé en ce qu'**un élément de fixation (30) est d'abord inséré dans une première rainure (28) périphérique sur la périphérie extérieure du boîtier (20) ou dans une deuxième rainure (46) périphérique sur la périphérie intérieure du raccord de processus (24), le boîtier (20) est inséré axialement dans le raccord de processus (24) dans une zone de connexion (26), de sorte que la première rainure (28) et la deuxième rainure (46) sont superposées axialement à fleur dans la zone de connexion (26), et **en ce que** l'élément de fixation (30) est ensuite pressé radialement dans la première rainure (28) ou tiré dans la deuxième rainure (46).
